# FASCICULE DE BREVET EUROPEEN

(11) **EP 0 376 786 B1**
(45) Date de publication et mention de la délivrance du brevet: **02.03.1994**
(21) Numéro de dépôt: 89403485.9
(22) Date de dépôt: 14.12.1989
(51) Int. Cl.: H01G 4/32, H01G 4/30, H01G 4/24

(54) **Procédé de fabrication de condensateurs en couches possédant une épaisseur de couches inactives**
Verfahren zur Herstellung von Schichtkondensatoren mit einer Dicke von inaktiven Schichten
Method of manufacturing layered capacitors having a thickness made up of inactive layers

(30) Priorité: 23.12.1988 FR 8817086
(43) Date de publication de la demande: 04.07.1990
(73) Titulaire: COMPAGNIE EUROPEENNE DE COMPOSANTS ELECTRONIQUES LCC, F-92400 Courbevoie (FR)
(72) Inventeur: Gillet, Robert, F-92045 Paris la Défense (FR)
(74) Mandataire: Guérin, Michel

(56) Documents cités:
- FR-A- 2 011 553
- FR-A- 2 497 393

## Description

La présente invention concerne un procédé de fabrication de condensateurs en couches possédant une épaisseur de couches inactives.

Pour différentes raisons (isolement électrique ou physique, protection, maintien d'un empilement), on est quelquefois amené à bobiner, lors de la fabrication d'un condensateur en couches, une certaine épaisseur de couches inactives. Ceci est apparu avec la technologie maintenant couramment utilisée de bobinage de films diélectriques métallisés sur une roue de grand diamètre. Les films sont par exemple métallisés sur une face à l'exception d'une marge latérale. On peut alors, pour obtenir un condensateur-mère, bobiner sur une roue deux de ces films pour former un empilement, les marges étant alternées et un débordement latéral des parties métallisées étant prévu dans l'empilement réalisé. Par métallisation ou schoopage des faces latérales de l'empilement, on associe en parallèle les condensateurs élémentaires constitués par un film diélectrique compris entre deux métallisations.

Si on veut bobiner autour de ces deux couches, qui constitueront les parties actives de condensateurs, un certain nombre de couches inactives, on peut à ce jour procéder de différentes façons.

On connaît la technique de démétallisation d'un film plastique revêtu d'une couche métallique (qui est généralement de l'aluminium dans le cas de condensateurs) sous l'effet d'un arc électrique. Ce procédé est largement répandu. Il a pour inconvénient majeur d'encrasser rapidement le système démétalliseur.

On connaît aussi la technique qui consiste à insérer, pendant le bobinage, des couches de films non métallisées donc non actives. Ce procédé est difficilement compatible avec des productions à hautes cadences et en particulier au bobinage sur roue de grand diamètre. En effet, il nécessite des arrêts de la machine de bobinage et des manipulations fréquentes.

Afin de pallier ces inconvénients, l'invention propose un procédé original qui a l'avantage de réaliser un bobinage de tours inactifs sans démétallisation, sans arrêt de machine et sans ruptures volontaires du film. Ce bobinage de tours inactifs est obtenu à partir des films utilisés pour réaliser la partie active des condensateurs et grâce à une opération de déplacement latéral sans arrêt de l'opération de bobinage.

L'invention a donc pour objet un procédé de fabrication de condensateurs à partir de couches de film diélectrique et d'armatures conductrices, le procédé comprenant une étape de bobinage, soit pour fournir directement un condensateur bobiné, soit sur une roue de grand diamètre pour fournir des condensateurs empilés, le bobinage étant fait de façon que les couches d'armatures successives soient séparées par une couche de film diélectrique et que chaque armature laisse une marge latérale par rapport à un côté de l'enroulement avec, de chaque côté de l'enroulement, alternance des marges dans l'enroulement et débordement latéral des armatures afin que les armatures débordant de chaque côté puissent respectivement être par la suite reliées pour obtenir l'effet capacitif, le procédé comprenant également une étape de métallisation des côtés de l'enroulement réalisé pour fournir les électrodes des condensateurs, la métallisation ayant pour effet de relier électriquement les armatures correspondant à une même électrode, caractérisé en ce que le procédé comprend en outre une étape consistant à déplacer latéralement par rapport aux côtés de l'enroulement des couches pendant l'opération de bobinage afin d'obtenir une épaisseur déterminée de couches inactives, le déplacement latéral ayant pour effet d'éviter que les armatures conductrices soient reliées aux électrodes.

L'invention sera mieux comprise et d'autres avantages apparaîtront grâce à la description qui va suivre, donnée à titre d'exemple non limitatif, accompagné des dessins annexés parmi lesquels :
- la figure 1 représente la disposition de deux couches lors de l'opération de bobinage de condensateurs en couches,
- la figure 2 représente la structure d'un enroulement obtenu par bobinage de couches capacitives,
- la figure 3 illustre l'opération de déplacement latéral des couches capacitives selon l'invention.

Le procédé selon l'invention va être plus particulièrement décrit dans son application à la fabrication de condensateurs du type empilé, obtenu par bobinage de film diélectrique métallisé simple face sur une roue de grand diamètre. C'est en effet une technologie actuellement très répandue. Cependant, le procédé selon l'invention peut s'appliquer également à d'autres applications. On peut citer, toujours dans le cas du bobinage sur une roue de grand diamètre, le cas des condensateurs obtenu par bobinage de films métallisés double face et margés d'un même côté, le cas où les films diélectriques ne sont pas métallisés et où les armatures sont elles-mêmes des films métalliques bobinés en même temps que les films diélectriques. On peut citer également la technologie de fabrication de condensateurs par bobinage individuel.

Les figures annexées se rapportent donc au cas général du bobinage sur une roue de grand diamètre de films diélectriques métallisés simple face.

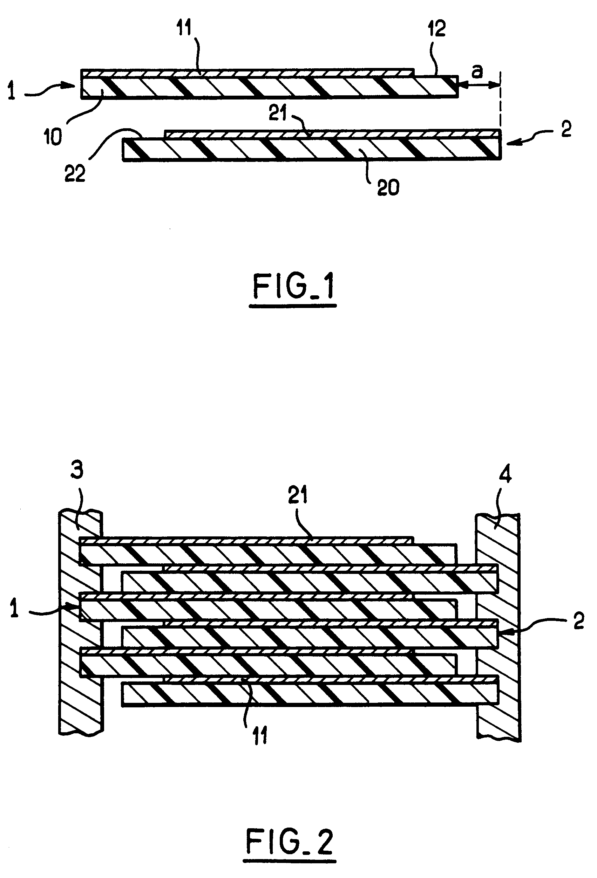

La figure 1 représente, vu en tranche, la disposition de deux couches 1 et 2, chacune étant respectivement constituée d'un film diélectrique 10 et 20 et d'une métallisation 11 et 21 jouant le rôle d'armature conductrice, en cours de bobinage. Les métallisations ne recouvrent pas totalement les films : il subsiste des marges latérales 12 et 22. On constate également que le bobinage est effectué en prévoyant un débord a dans l'enroulement. Comme le montre la figure 1, les parties métallisées des films déborderont latéralement de l'enroulement. Cette disposition est bien connue de l'homme de l'art.

La figure 2 représente, vu en tranche, le résultat obtenu après quelques tours de la roue de bobinage. L'enroulement est constitué d'alternances de couches 1 et 2. Par métallisation des côtés de l'enroulement, ou schoopage, on provoque la mise en parallèle de tous les condensateurs élémentaires constitués par chaque film diélectrique compris entre les armatures conductrices que forment les parties métallisées. Le débord a consécutif au bobinage permet la bonne prise de contact électrique entre les métallisations 3 et 4 des côtés de l'enroulement et les armatures conductives, respectivement 11 et 21. Après découpe du condensateur-mère obtenu sur la roue de bobinage, les métallisations 3 et 4 constitueront les électrodes de pavés capacitifs élémentaires.

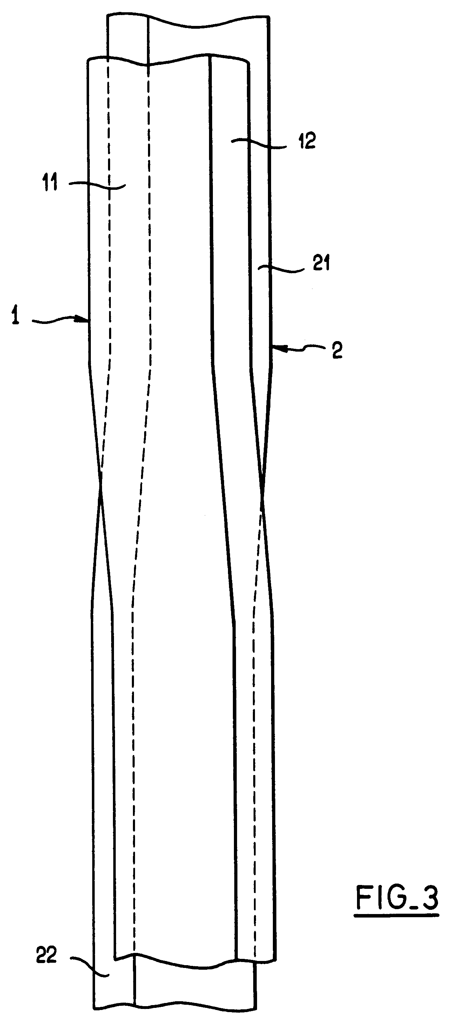

La figure 3 illustre l'étape du procédé selon l'invention qui permet d'obtenir une partie inactive dans l'enroulement. Les couches 1 et 2 ont cette fois été représentées vues de dessus. On reconnaît leurs parties métallisées 11 et 21 et leurs marges 12 et 22. La partie supérieure de la figure représente la disposition habituelle des films l'un par rapport à l'autre pour réaliser la partie active des condensateurs. Les parties métallisées 11 et 21 débordant de l'enroulement, elles seront contactées électriquement à leur métallisation latérale correspondante. Dans la partie médiane de la figure, on a représenté l'opération de déplacement latéral des couches 1 et 2 effectuée au cours du bobinage. Ce déplacement latéral conduit à la situation représentée en bas de la figure où l'on constate que ce sont maintenant les marges 12 et 22 qui débordent de l'enroulement. Les parties métallisées 11 et 21 ne pourront plus être contactées par les métallisations latérales. On peut obtenir ainsi une épaisseur déterminée de couches inactives. Le retour au bobinage habituel se fait en inversant le sens du déplacement latéral des couches 1 et 2.

Sur la figure 3, ce sont les deux couches qui sont déplacées latéralement, mais on pourrait faire en sorte que ce soit l'une ou l'autre des couches qui se déplace latéralement.

Le déplacement latéral des couches peut se faire en un temps très court. Il est avantageux de se servir du système de guidage des couches à bobiner, existant sur les machines à bobiner, pour provoquer ce déplacement latéral. Ce système de guidage étant très précis, il sera aisé de contrôler l'amplitude du déplacement latéral recherché. En outre, il s'agit d'un système déjà existant sur les machines et il suffira d'introduire de légères modifications sur les machines pour mettre en oeuvre l'invention.

Le déplacement latéral peut être obtenu par un asservissement électro-mécanique du système de guidage des films. L'asservissement peut être intégré dans l'électronique de la machine et assuré par toutes sortes de systèmes électromécaniques connus à ce jour.

L'invention permet d'inverser les bords des films à très grande vitesse sans nuire aux qualités électriques des condensateurs.

Le procédé selon l'invention, bien qu'utilisant comme matière non active des films métallisés en eux-mêmes coûteux, voit tout son intérêt dans un bobinage empilé sur une roue de grand diamètre où la rupture volontaire des films est un inconvénient majeur.

Dans l'exemple décrit ci-dessus, ce sont des films diélectriques métallisés qui se déplacent. Dans d'autres applications de l'invention, il peut s'agir, selon les cas, de films diélectriques non métallisés ou au contraire métallisés double face, de feuilles métalliques jouant le rôle d'armatures conductrices,... Le principe est de rendre inactives certaines couches en évitant que les armatures conductrices soient reliées aux électrodes.

## Revendications

1. Procédé de fabrication de condensateurs à partir de couches (1, 2) de film diélectrique (10, 20) et d'armatures conductrices (11,21), le procédé comprenant une étape de bobinage, soit pour fournir directement un condensateur bobiné, soit sur une roue de grand diamètre pour fournir des condensateurs empilés, le bobinage étant fait de façon que les couches d'armatures (11,21) successives soient séparées par une couche de film diélectrique (10,20) et que chaque armature (11,21) laisse une marge latérale par rapport à un côté de l'enroulement avec, de chaque côté de l'enroulement, alternance des marges dans l'enroulement et débordement latéral des armatures (11, 21) afin que les armatures (11, 21) débordant de chaque côté puissent respectivement être par la suite reliées pour obtenir l'effet capacitif, le procédé comprenant également une étape de métallisation des côtés (3, 4) de l'enroulement réalisé pour fournir les électrodes des condensateurs, la métallisation ayant pour effet de relier électriquement les armatures (11, 21) correspondant à une même électrode, caractérisé en ce que le procédé comprend en outre une étape consistant à déplacer latéralement par rapport aux côtés de l'enroulement des couches pendant l'opération de bobinage afin d'obtenir une épaisseur déterminée de couches inactives, le déplacement latéral ayant pour effet d'éviter que les armatures conductrices (11, 21) soient reliées aux électrodes.

2. Procédé de fabrication selon la revendication 1, caractérisé en ce que lesdites couches étant constituées de films diélectriques métallisés simple face avec une marge latérale (12, 22), le bobinage se fait, pour obtenir l'effet capacitif, avec alternance des marges dans l'enroulement et débordement latéral des parties métallisées des films et, pour obtenir l'épaisseur déterminée de couches inactives, en déplaçant latéralement au moins un film diélectrique métallisé pour que ce soit les marges qui débordent de l'enroulement.

3. Procédé de fabrication selon l'une des revendications 1 ou 2, caractérisé en ce que ledit déplacement latéral est obtenu par action du système de guidage des couches à bobiner et faisant partie d'une machine à bobiner les condensateurs en couches.

## Claims

1. Method of manufacturing capacitors from layers (1, 2) of dielectric film (10, 20) and of conducting foils (11, 21), the method comprising a winding step, either in order to provide a wound capacitor directly or to provide stacked capacitors on a large-diameter wheel, the winding being performed so that the successive layers of foils (11, 21) are separated by a layer of dielectric film (10, 20) and so that each foil (11, 21) leaves a lateral margin in relation to one side of the wound coil with, on each side of the wound coil, alternation of the margins in the wound coil and lateral projecting of the foils (11, 21) so that the foils (11, 21) projecting from each side can thereafter be connected respectively in order to obtain the capacitive effect, the method also comprising a step of metallisation of the sides (3, 4) of the wound coil produced, in order to provide the electrodes of the capacitors, the metallisation having the effect of electrically connecting the foils (11, 21) corresponding to the same electrode, characterised in that the method furthermore comprises a step consisting in laterally shifting, in relation to the sides of the wound coil, layers during the winding operation so as to obtain a defined thickness of inactive layers, the lateral shift having the effect of preventing the conducting foils (11, 21) from being connected to the electrodes.

2. Manufacturing method according to Claim 1, characterised in that, since the said layers consist of dielectric films metallised on a single face with a lateral margin (12, 22), the winding is performed, in order to obtain the capacitive effect, with alternation of the margins in the wound coil and lateral projection of the metallised parts of the films and, in order to obtain the defined thickness of inactive layers, by laterally shifting at least one metallised dielectric film so that it is the margins which project from the wound coil.

3. Manufacturing method according to either of claims 1 or 2, characterised in that the said lateral shift is obtained by action of the system for guiding the layers to be wound and forming part of a machine for winding layered capacitors.

## Patentansprüche

1. Verfahren zur Herstellung von Kondensatoren aus Schichten (1, 2) dielektrischer Filme (10, 20) und leitender Beläge (11, 21), wobei das Verfahren eine Stufe des Wickelns enthält, entweder um direkt einen Wickelkondensator zu liefern, oder auf einem Rad großen Durchmessers, um Stapelkondensatoren zu liefern, wobei das Wickeln so erfolgt, daß die aufeinanderfolgenden Belagschichten (11, 21) voneinander durch eine dielektrische Filmschicht (10, 20) getrennt sind und daß jeder Belag (11, 21) in Bezug auf eine Seite der Wicklung einen seitlichen Rand freiläßt, wobei auf jeder Seite der Wicklung Ränder in der Wicklung mit einem seitlichen Überstand der Beläge (11, 21) abwechseln, damit die auf jeder Seite überstehenden Beläge (11, 21) nachfolgend jeweils miteinander verbunden werden können, um die kapazitive Wirkung zu erhalten, und wobei das Verfahren auch eine Stufe der Metallisierung der Seiten (3, 4) der gebildeten Wicklung enthält, um die Kondensatorelektroden zu liefern, wobei die Metallisierung die Wirkung ergibt, daß die einer gleichen Elektrode entsprechenden Beläge (11, 21) elektrisch miteinander verbunden werden, dadurch gekennzeichnet, daß das Verfahren ferner eine Stufe enthält, die darin besteht, Schichten während des Wickelns in Bezug auf die Seiten der Wicklung seitlich zu verschieben, um eine bestimmte Dicke von inaktiven Schichten zu erhalten, wobei die seitliche Verschiebung bewirkt, daß vermieden wird, daß die leitenden Beläge (11, 21) mit den Elektroden verbunden werden.

2. Herstellungsverfahren gemäß Anspruch 1, dadurch gekennzeichnet, daß bei Schichten, die aus einseitig mit einem seitlichen Rand (12, 22) metallisierten dielektrischen Filmen bestehen, zur Erzielung der kapazitiven Wirkung das Wickeln mit Abwechslung der Ränder in der Wicklung und des seitlichen Überstands der metallisierten Teile der Filme erfolgt und, zur Erzielung der bestimmten Dicke inaktiver Schichten, unter seitlicher Verschiebung wenigstens eines metallisierten dielektrischen Films, damit die Ränder über die Wicklung überstehen.

3. Herstellungsverfahren gemäß einem der Ansprüche 1 oder 2, dadurch gekennzeichnet, daß die seitliche Verschiebung durch die Wirkung des einen Teil einer Maschine zum Wickeln der Schichtkondensatoren bildenden Führungssystems für die zu wickelnden Schichten erhalten wird.
